# EUROPEAN PATENT APPLICATION

(11) **EP 2 750 033 A1**
(43) Date of publication of application: **02.07.2014**
(21) Application number: 12382537.4
(22) Date of filing: 27.12.2012
(51) Int. Cl.: G06F 9/445

(54) **Portable modem communication device and Method to provide connectivity capabilities to a computing device**

(71) Applicant: Telefonica S.A., 28013 Madrid (ES)
(72) Inventor: Alonso Ruíz, David, 28013 Madrid (ES); Honorato García, José Ignacio, 28013 Madrid (ES)
(74) Representative: Gonzalez-Alberto Rodriguez, Natalia

(57) **Abstract**

The portable modem communication device comprising a host port to be connected to said computing device by plugging it thereto and a memory with a bootstrapping Operative System wherein said memory is an internal memory of said portable modem communication device. The method being implemented to provide said connectivity capabilities to said computing device by using said portable modem communication device.

## Description

### Field of the art

The present invention relates to the field of data mobile broadband communications devices and methods, and, more particularly, to a portable modem communication device and to a method to provide connectivity capabilities to a computing device.

### Prior State of the Art

Data mobile broadband has exploited in the last years thanks to the massive introduction of compatible devices through operators channels. Although data cards were the starting point, USB dongles adoption within mobile networks bandwidth improvements (3G, HSPA...) has boosted the mobile data usage. For this reason some PC makers include the mobile modem embedded so there is no need for an external USB dongle. However this approach does not allow portability connection across devices. By 3G it needs to be understood any mobile broadband available type of network and connectivity available in the modem (GPRS, LTE-4G).

In the same way, PCs penetration (any device with enough processor performance to run an OS, as laptops/netbooks, tablets, nettops, or equivalent equipment) has grown drastically in the market. Up to the 'tablet' concept, appearance and Android equipment success, the frontiers between computers and telephony devices was very clear but now both worlds are merging through different form factors. In the same way, thanks to the rise of mobile networks bandwidth, cloud computing concepts start to be commercialized (i.e. Chrome OS®).

Although there are different models of 3G modems (including hardware designs), it is possible to summarize the following specifications and capabilities of them:
- Include a USB port.
- Include an internal memory for storing the firmware that controls the modem behavior and the software to install on the PC for communication management (i.e. PC drivers). Depending on the manufacturer, this software can be compatible with different operating systems in the market (i.e. Windows XP®, Windows Vista®, Mac®...). In order to avoid this driver's installation process, there are some new products coming to the market that provide proprietary solutions for reducing this process.
- Most of them include a micro Secure Digital (mSD) slot or transflash, additional to the SIM card. This allows the user or manufacturer to include extra memory.
- With or without application process capabilities, if it is included the modem could by itself to execute small frameworks or operating systems.
- In order to facilitate the software installation, the modems provide an auto installation mechanism when they are inserted in a compatible device (mainly laptop). For this propose the USB when plugged in the PC shows a CD Rom unit. After a successful installation, if the modem is inserted in the same equipment, this process is skipped.
- In order to warranty product evolution in the time (fixing bugs, supporting new platforms, etc.) all the manufacturers supports proprietary or standards mechanisms for updating or upgrading the firmware.
- It could have own battery. In that case, the modems can act as a mobile router.

On the other hand, the number of OS for portable devices such as PCs or mobiles is also growing. All of them keep special focus on the connectivity: 'always on' concept. Although in some cases this connectivity is mandatory (i.e. Chrome OS®), in others is just an added value service (i.e. Tizen® or Android®).

Nowadays the number of devices owned is increasing periodically. Starting from a desktop or laptop, a handset, 3G USB modem or a tablet have been also added. This scenario can be more confused if some hybrid devices are also considered. The frontier between PC and other devices is more diffused and convergence among all of them is unavoidable.

In the PC ecosystem, the OSs' are upgraded regularly for providing new functionalities. It implies more and more hardware resources. In parallel, this new operating systems are appearing, sometimes evolving from the handsets & family and other times trying to move "intelligent" to the network applying cloud computing solutions. Most of the times the user needs to be ready and connected in some seconds to do a concrete task (for example check email at the airport) but he does not need to have 100% of the OS software available, by OS it has to be understood a full Operating System or any solution of UI running as a framework for user and giving him access to services and data.

In the same way, as the user starts to have multiple devices with multiple configuration and multiple Uls, the availability to reuse a common device to unify his experience is a complement welcomed.

The solution proposed in the present invention solves the time reduction for booting up and connecting the equipment to the network, and additionally provides a portable UI/Data solution without adding new gadgets or complexity to the user. The same procedures the user does every day now can expand new possibilities.

The current existing solutions in the market mainly are:
- Regular USB modems and variants of them (with or without dedicated application processor), usually supporting mSD cards.
- Pure USB flash disk (only memory) that can content an auto executed version of an OS (Live CD experience).
- The OS can be stored on the mSD card, so it could be inserted in any device with dedicated slot (i.e. a USB modem). But again, it is an isolate OS without any integration and optimization with the device is porting it.
- Small number of PC manufacturers includes in some models of their laptops, mainly on netbooks, a dedicated button for booting a secondary OS in a faster way. This extra OS allows the user to get access to a reduce number of services and the connectivity integration is not guarantee especially if we consider mobile broadband.

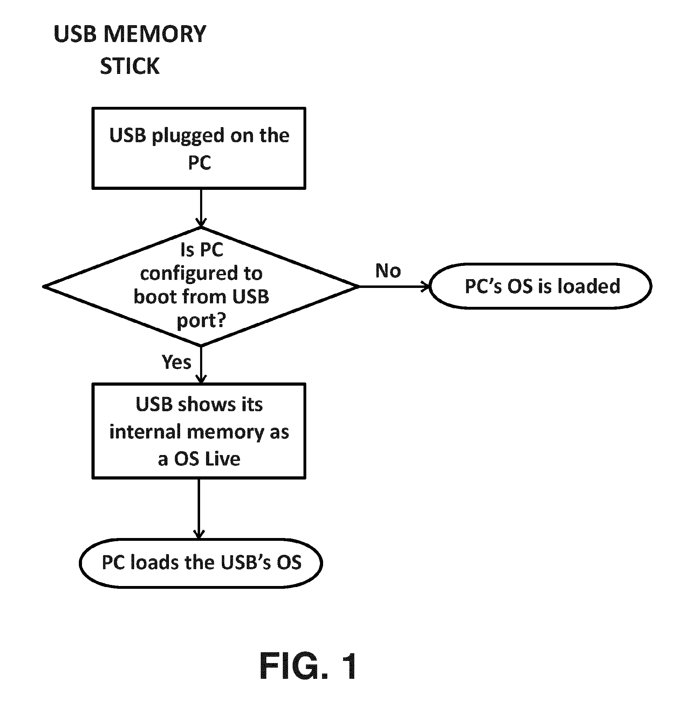

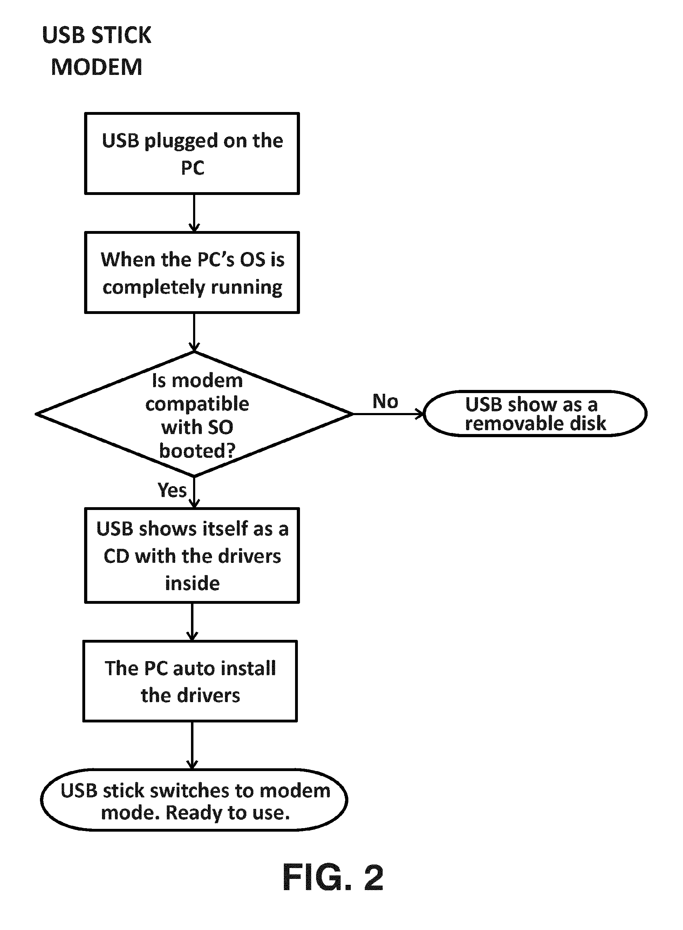

Figure 1, 2 and 3 show some working process embodiments regarding the existing solutions on the different USB sticks models (memory, modem and modem with Live CD on mSD, respectively).

In the current architecture, the main problem detected is the long time needed to execute all the process. This long complex process disqualifies any attractive commercial product. Additionally, these solutions could not work on different devices (for example smart TVs or set top box) if the OS is not compatible with and there is no compatible drivers for it available.

### Summary of the Invention

The object of the invention is to provide a 3G USB dongle that includes his own OS that can run on a PC or any other computing device without any installation of software on it, and within a fast bootstrapping and transparent connection to data networks.

After the initialization process of the portable modem communication device or 3G USB, the OS will be ready and connected to the network, mainly mobile network but if preferred any kind of network could be configured.

In a first aspect the present invention relates to a portable modem communication device to provide connectivity capabilities to a computing device, comprising a host port to be connected to said computing device by plugging it thereto and a memory with a bootstrapping Operative System. On contrary to the known proposals, the memory is an internal memory of said portable modem communication device.

The internal memory is a circuit integrated in said portable modem communication device or 3G Universal Serial Bus (USB) device and the computing device is at least one of a PC, a table, a smart phone, a notebook, a smart TV and any other device with computing capacities.

According to an embodiment, at least a further Operative System is at least stored in said internal memory. On contrary, in yet another embodiment, the at least further Operative System can be stored in another external storage means, such as a mSD card, an internal memory of said computing device, a SIM card and/or a cloud computing storage.

Finally, in yet another embodiment, the bootstrapping Operative System can be updateable, by means of local means, such as a PC connection, or remotely, connected to an updated server via 3G, 4G, WiFi or via any other connection, either in a manual or in an automatic way.

In a second aspect the present invention relates to a method to provide connectivity capabilities to a computing device, comprising using a portable modem communication device for providing said connectivity capabilities by means of bootstrapping an Operative System from a memory. On contrary to the known proposals said bootstrapping is performed from an internal memory of said portable modem communication device.

According to an embodiment, said bootstrapping is performed only from said internal memory.

According to another embodiment the corresponding drivers associated to said portable modem communication device are further loaded in said computing device as part of said Operative System bootstrapping. After that, the connectivity capabilities are automatically established once the portable modem communication device drivers are installed in said computing device.

Alternatively, the method to provide said connectivity also allows the access to another Operative System at least stored in said internal memory or in another external storage means.

### Brief Description of the Drawings

The previous and other advantages and features will be more fully understood from the following detailed description of embodiments, with reference to the attached, which must be considered in an illustrative and non-limiting manner, in which:
Figure 1, 2 and 3 are flow charts representing the working process of the current USB stick models solutions. Figure 1, represent the working process of a USB memory stick, figure 2 represents the working process of a USB stick modem and finally, figure 3 represents the working process of a USB stick modem with Live CD on mSD.

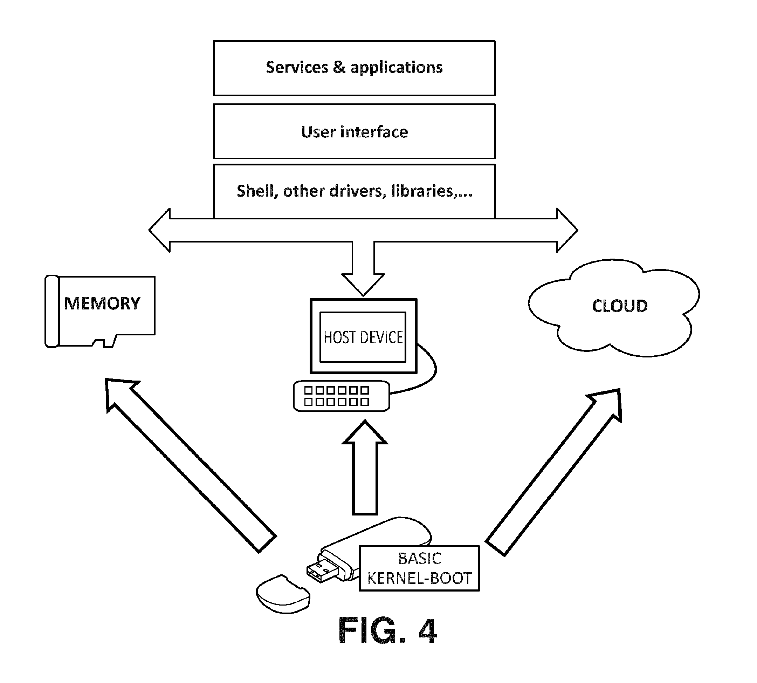

Figure 4 is an illustration of of the bootstrapping engine stack proposed in the present invention.

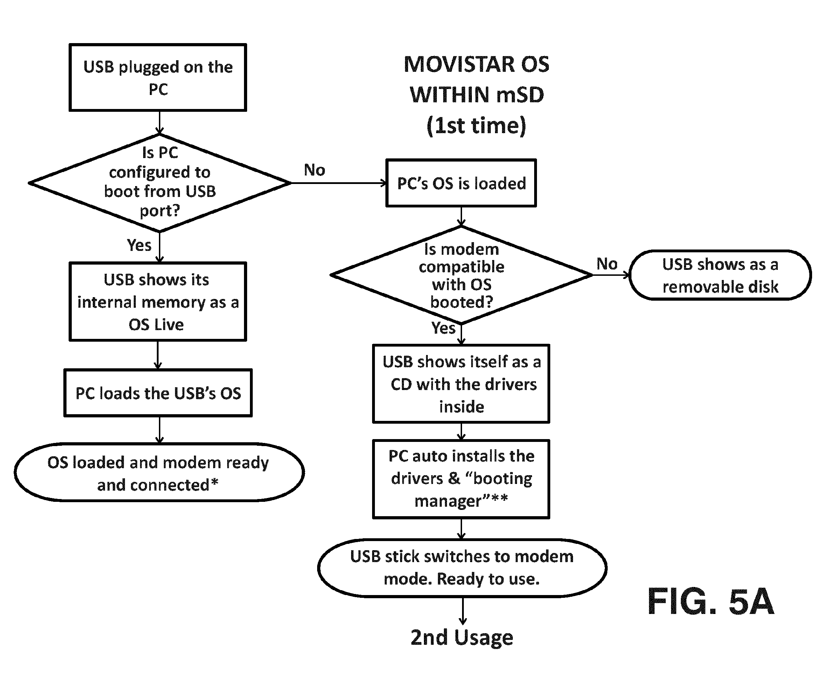

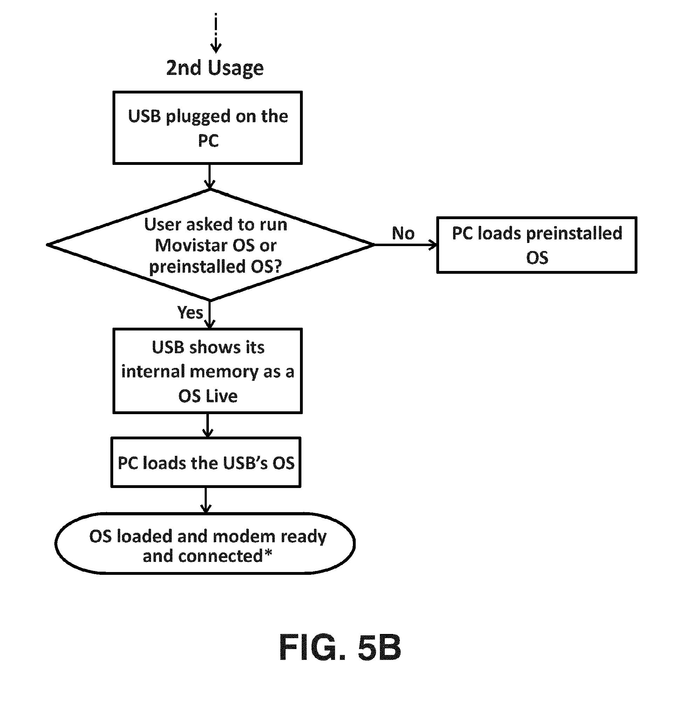

Figure 5 is a flow chart describing the process when using the present invention, according to an embodiment.

### Detailed Description of Several Embodiments

The bootstrapping engine, as shown in Figure 4, consists of a software or basic Kernel presented in the PC as a boosting system. Once this boosting system is recognized and launched from the PC it looks for the rest of the OS. This OS can be found directly in the same internal memory USB modem, in another removable memory, in a PC or any other accessible memory from the USB, even if it is in the cloud. For that, this Kernel boot (a mini OS), mounts the memories of accessible data and access to them to search for the rest of the OS components. In case these can be found in the network, the boot software will enable the native connectivity (mobile operator network, 3G, HSPA, etc.) to find the rest of the OS on a server, network repository or equivalent. In addition and subject of offloading network traffic, if the host (PC, tablet or equivalent) supports network interfaces, the Kernel will load the corresponding drivers and will enable the connection through them (LAN, WiFi, etc.). This type of behavior, like the rest of the functionalities described in this patent application, can be configured according to the existing needs (for instance, existing mobile coverage type, size of the OS to run/download remotely, etc.).

On another hand, and with respect to the software package which involves the running OS, top of Figure 4, it will consist of all the components of user interface, drivers and software necessary for the correct operation of the system on the PC on which it is run and for the resident applications, applications (e.g. a text editor or a web browser...), additional services that may be included (e.g. operator services) and configurations or persistent data required for each individual user or group of the same.

According to an embodiment of the second aspect, when the USB is inserted on the PC, if the bootstrapping from the USB is already preconfigured in the BIOS, the OS that will be started will be the USB existing one.

In case there has not been any pre-configuration for booting from USB, the user should change the BIOS. This process is not standard to all PCs and usually it is only recommended for advanced users. This is way when the user uses the modem as a "modem" in the regular PC OS (i.e. Windows®), with the installation of the software needed to manage modem , it is possible to set up very light software in the host device that controls the USB bootstrapping without user's BIOS modification.

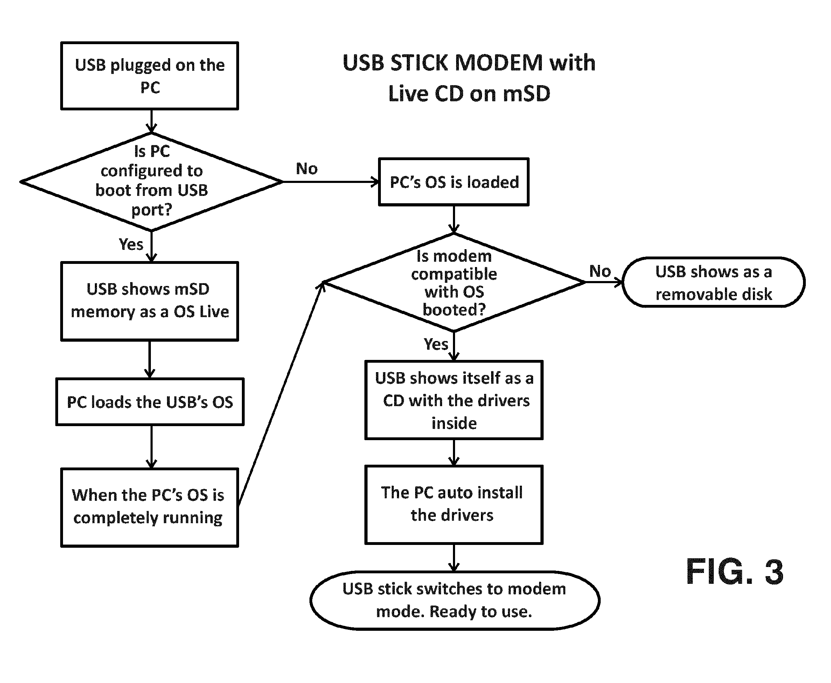

Figure 5 shows an example embodiment of the working process performed when using the solution of the present invention. Comparing the process described in Figure 5 with the process described in the previous Figure 3, it can be seen that the second part of the process is not needed (about 50% of tasks are reduced) and the connection to the network could be established in the same moment, without any additional step.

In the same way, if the mSD is removed, the OS on the USB detects that is not completed and the regular process for USB modems installation will happen. As the solution is independent of the place holding the OS, apart from the mSD, the OS part running on the modem could get the rest from data installed previously on the PC, on a remote server or invoke the downloading of this part to the own USB or PC. In this sense, it could be necessary that the modem device includes greater processing capacity.

Following that, if a configured mSD is removed from the modem and inserted on another not compatible one, the solution will not work.

Although embodiments of the invention are described running on a PC due to simplicity, the same concept will apply to other devices in which the modem could be plugged. For instance, in Smart TVs, Set Top Boxes, tablets, etc. In this cases could be needed other physical interfaces additional to the USB once.

Two scenarios can be found regarding the connection of the presented USB device on a PC. In the first scenario, the user inserts the new USB dongle in a PC that is running an OS already. In this case, the regular process of USB modem insertion happens. If it includes communication manager software in it and, if it not preinstalled on the PC, it will start auto installation. If modem and its software are pre-installed, the modem will be detected by the system and the regular usages will proceed.

In the second scenario, the user inserts for the first time the USB dongle on the PC switched off. In this case, two possible situations can happen:
- If BIOS is not configured to boot from USB, the regular OS of PC will be launched. If the modem includes any software (i.e. connection manager), then the auto-installation (if not done previously) will start. During any installation step it could be installed a small piece of software to warranty next time PC could bootstrap from USB without BIOS modification. If running USB OS, user decides to move to the PC OS, he just need to click to change OS.
- If BIOS is configured to boot from USB or smart agent is ready on the PC, the OS running on the USB will start automatically and it will connect to mobile broadband.

Several topics have been identified in order to describe the basis of the present invention. The main ones are:

Fast Booting: Some modifications on the regular firmware included in the modems have been made in order that the system could be bootable. This is needed, not only for getting the right behaviour but also to get the right performance on the starting process and network connection.

Owner control (usually mobile operator or partner): Comparing with other solutions, the one presented in the present application has been deployed maintaining a basic part in secure memory of the modem (internal memory where usually manufacturers store the modem firmware core). This main part cannot be erased and it will manage the OS execution. The rest of the OS needed could be also installed on the internal memory or in the SD card (usually less expensive memory).

If users retrieve SD card from the modem slot and insert in other device it won't be run. In the same way, this SD part could contain the data and configurations of the user and could be portable if new modem acquires. If new versions of the software were published it will be possible to update all the parts in the internal memory or SD card. Additionally, if needed the basic core part can require download the rest of the system automatically to a server in case the SD was broken or accidentally deleted.

System updateable: As it was mentioned above, the system can be updated remotely (manual or automatic way). Not only the software on the SD, but also the firmware elements, if required. As the system is so flexible in this way, it is possible also to configure and download different "flavours" according to market segmentation, partner collaboration, customer location or any differentiation needed.

The system also allows run a complete computer in the cloud. Then the core installed can invoke any OS on internet or equivalent. In that case there is not any maintenance and the USB-PC is always updated by default.

Finally, to point out that as the system is completely updated it would enable to download the solution on existing and distributed USB modems if hardware minimum requirements allows it.

Connectivity integration: The system has been created around mobile broadband, so the integration of the connectivity is fully in place. The user doesn't require do anything. By default the OS will be running and connected to mobile broadband network, but if user desire, he could configure their own policy for getting internet data access (prioritise some WiFi again mobile broadband, etc.).

Bootstrapping without BIOS modification: Although a BIOS modification is needed in case user don't want to install anything on the PC or system, in order to facilitate the system starting process and avoid any entry barrier, the solution allows the user to install in a transparent way (i.e. linked to the regular communication manager installation) a small piece of software that will let users to select working with modem OS.

Several prototypes of the present invention have been also tested over ZTE modems (model 196 and 190) running a Linux OS variant. The modem is a current commercial modem that is being tuned according new product definition. This prototype has been tested in a Focus Group to gest customer's feedback.

As an example two different models are described:
- A *'ChromeBook like'* device based on Chromium browser running on top a Gnome shell. The behaviour for the user is equivalent to use one of the commercial Google® PCs in a portable way and agnostic of the hardware being used.
- A full Movistar OS based on a Gnome Shell. The Linux core is customised to provide Movistar® on line services access and experiences (cloud storage solutions, streaming TV, social networking, emailing ...).

The present invention is OS "agnostic", so that other products can be defined within different OS on board, especially if they have been created for running on portable devices (mainly netbooks, notebooks, tablets...). Meego® and his evolution Tizen® can be other alternatives, without forgetting incoming cloud OS such as Boot to Geeko (B2G).

The modem has been modified (firmware and software) to support all new features and requirement described in this document.

Although the solution has been tested en regular windows platforms running on top of legacy and current hardware from main laptops manufacturers, it can run also on top of other platforms.

This solution presented will allow extra low cost platform to deliver services and solutions to customers. Apart from the own mobile operators business that lead the distribution of this kind of hardware, it could be a way for third parties or internet players (such as Google®, Intel®, Microsoft®, Facebook®, Tuenti®, etc.) to have presence with a minimum cost.

Moreover, the OS integrated on the USB could be customized or compiled to run on any kind of devices such as TVs or Game consoles, etc. providing them new connected OS.

The user will get a portable connected PC running from their 3G dongle, within their data and configuration on board, so that users will be agnostic about how and when and the system will be ready in seconds, less than the most of the PC's time switch on. This is a perfect solution for mobility uses cases where in an spontaneous way the users need to connect in seconds, play some actions (review email and answer it, for example) and disconnect.

Thanks to the mobile broadband integration, the system could be ready with internet access without any user's interaction, in a transparent and automatic way. In an effort to provide a transparent solution will be possible to run the connected environment from the USB modem without user's BIOS modification. It allows get more potential customers and skip curve learning barriers it could appear. The user just needs to decide insert the USB modem before start the PC for running the new system.

The solution allows to being used in most of the legacy devices due to the short requirement in terms of performance needed. That minds that "old machines" that did not support new operating systems could be compatible with this one.

Moreover, it defines an architecture that allows owner of the device and partners (mobile operator, device manufacturer ...) controls the system and avoid unofficial usage of it without block or depreciate user's experience.

The present solution provides a new way to create value for this slot of products, currently a commodity and can be a great differentiate against competitors. In the same way, it should be a new way to promote and sell operator services value proposal and to reproduce the success of handset apps markets on this new environment and it could also create a new ecosystem that can be opened to 3^{rd} parties or partners. So, thousands of possibilities appear thanks to this commercialization.

On another hand, for 3^{rd} parties (Internet and Telco companies, OMVs ...) it is a way to promote their value proposition and services to their customers with very low cost. It could be an additional platform to extend their presence in the market.

A design option of the described solution could be implemented having a connection means, such as a button, where the user, depending of the requirements, could activate or not the SO bootstrapping from the internal memory of the USB device, thus preserving, if said connection means is not activated, a normal behavior of the device, as any other USB in the market. Therefore, the present solution offers double option possibilities for providing connection to the data networks.

Although certain specific implementation examples have been described and illustrated, an expert in the material would be able to introduce multiple variations to these without leaving the scope of the invention, which is defined by the attached claims.

## Claims

1. A portable modem communication device to provide connectivity capabilities to a computing device, comprising a host port to be connected to said computing device by plugging it thereto and a memory with a bootstrapping Operative System **characterized in that** said memory is an internal memory of said portable modem communication device.

2. A portable modem communication device according to claim 1, **characterized in that** said internal memory is a circuit integrated in said portable modem communication device.

3. A portable modem communication device according to claim 2, **characterized in that** at least a further Operative System is at least stored in said internal memory.

4. A portable modem communication device according to claim 2, **characterized in that** at least a further Operative System is at least stored in another external storage means.

5. A portable modem communication device according to claim 4, **characterized in that** said another external storage means is at least one of a mSD card, an internal memory of said computing device, a SIM card and/or a cloud computing storage.

6. A portable modem communication device according to any of the previous claims, **characterized in that** said bootstrapping Operative System is updateable.

7. A portable modem communication device according to previous claims, **characterized in that** said portable modem communication device is a 3G Universal Serial Bus (USB) device.

8. A portable modem communication device according to any of the previous claims, **characterized in that** said computing device is at least one of a PC, a table, a smart phone, a notebook, a smart TV and any other device with computing capacities.

9. A method to provide connectivity capabilities to a computing device, comprising using a portable modem communication device for providing said connectivity capabilities by means of bootstrapping an Operative System from a memory, **characterized in that** said bootstrapping is performed from an internal memory of said portable modem communication device so that an automatic plug and connect mode is guaranteed.

10. A method according to claim 9, **characterized in that** said bootstrapping is performed only from said internal memory.

11. A method according to claim 9 or 10, **characterized in that** it further comprises loading drivers associated to said portable modem communication device in said computing device as part of said Operative System bootstrapping.

12. A method according to claim 11, comprising automatically establishing said connectivity capabilities once the portable modem communication device drivers are installed in said computing device.

13. A method according to claim 9 or 10, **characterized in that** it further comprises accessing to at least another Operative System stored in said internal memory or in another external storage means.
